# EUROPÄISCHE PATENTANMELDUNG

(11) **EP 1 209 509 A1**
(43) Veröffentlichungstag der Anmeldung: **29.05.2002**
(21) Anmeldenummer: 00119041.2
(22) Anmeldetag: 02.09.2000
(51) Int. Cl.: G02C 1/04

(54) **Brille mit auswechselbaren Gläsern**

(71) Anmelder: Gers, Hans Jürgen, 22609 Hamburg (DE)
(72) Erfinder: Gers, Hans Jürgen, 22609 Hamburg (DE); Gers, Bettina, Dr. med., 22609 Hamburg (DE)
(74) Vertreter: Hansmann, Dierk, Dipl.-Ing.

(57) **Zusammenfassung**

Bei einer Brille mit auswechselbaren Gläsern ist jedes Glas an mindestens zwei Stellen über eine Magnethalterung mit dem Brillengestell verbunden. Es ist dabei jeweils der an dem Brillengestell angebrachte Teil der Magnethalterung auf einem pilzförmigen Kopf beweglich gelagert.

## Beschreibung

Die Erfindung bezieht sich auf eine Brille mit auswechselbaren Gläsern, wobei jedes Glas an mindestens zwei Stellen über eine Magnethalterung mit dem Brillengestell lösbar verbunden ist.

Eine Anordnung dieser Art mit auswechselbaren Gläsern über eine magnetische Haftverbindung ist nach der WO 96/37800 A2 bereits bekannt. Der Mangel bei dieser Anordnung ist es, daß die Magnete fest an den Gläsern bzw. an der Fassung angebracht sind.

Weiterhin ist aus der DE-GM 1 951 702 und der US 4,196,981 bekannt, Schwenkbewegungen der aufgenommenen Gläser über Magnete in eingestellten Lagen zu halten.

Die Aufgabe der Erfindung ist es, Gläser verschiedener Größe am Brillengestell auswechselbar aufzunehmen und dabei eine Anpassung zur ordnungsgemäßen Magnethalterung zu gewährleisten.

Die Lösung dieser Aufgabe erfolgt durch die Merkmalskombination des Anspruches 1. Hierdurch wird eine Zuordnung der korrespondierenden Magnete zur ordnungsgemäßen Halterung ermöglicht.

In der Zeichnung ist ein Ausführungsbeispiel der Erfindung schematisch dargestellt. Es zeigen:

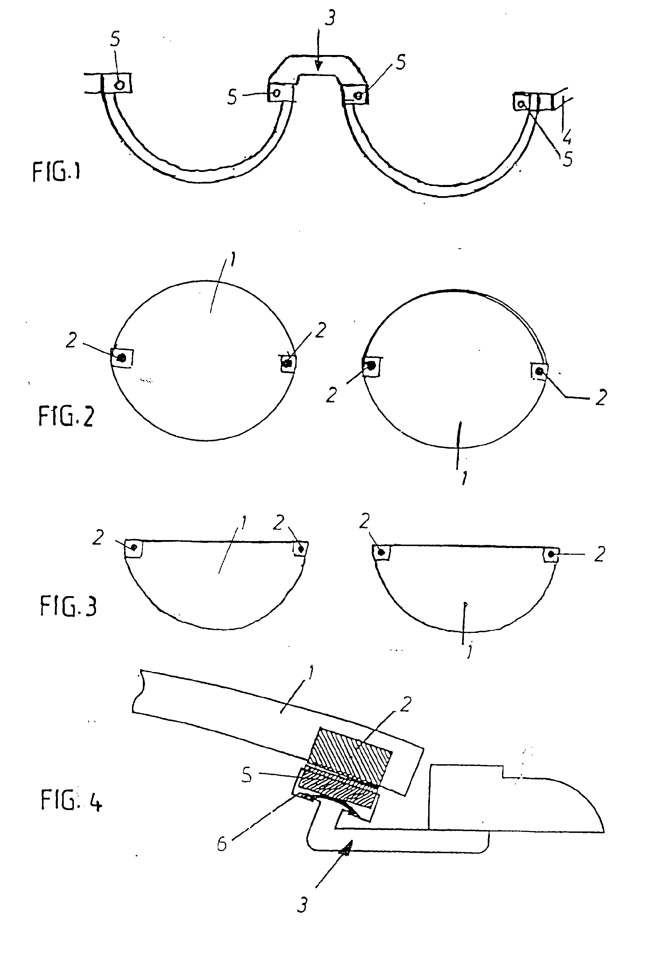

- Fig. 1: ein Brillengestell mit Magneten zur Aufnahme von austauschbaren Brillengläsern,
- Fig. 2: Brillengläser mit beidseitigen Magneten in vollständiger Form,
- Fig. 3: Brillengläser mit beidseitigen Magneten in Halbform und
- Fig. 4: eine vergrößerte Darstellung der Zuordnung der Magnete von Brillenglas und Brillengestell mit beweglicher Aufnahme im Brillengestell.

Bei der dargestellten Anordnung besitzen die auswechselbaren Brillengläser 1 beidseitig angeordnete, fest zugeordnete Magnete 2. Das entsprechende Brillengestell 3 mit Haltebügel 4 besitzt entsprechende Magnete 5, die mit den Magneten 2 der Brillengläser 1 korrespondieren.

Zur besseren Einstellbarkeit und Zuordnung der Magnete 2,5 ist im Brillengestell 3 der Magnet 5 jeweils über einen pilzförmigen Kopf 6 beweglich einstellbar gelagert.

## Patentansprüche

1. Brille mit auswechselbaren Gläsern (1), wobei jedes Glas (1) an mindestens zwei Stellen über eine Magnethalterung mit dem Brillengestell (3) verbunden ist und jeweils der an dem Brillengestell (3) angebrachte Teil der Magnethalterung auf einem pilzförmigen Kopf (6) beweglich gelagert ist.
